# EUROPEAN PATENT SPECIFICATION

(11) **EP 1 282 850 B1**
(45) Date of publication and mention of the grant of the patent: **10.07.2013**
(21) Application number: 00929667.4
(22) Date of filing: 02.05.2000
(51) Int. Cl.: G06F 3/01, G09B 5/00, A63B 71/06

(54) **PROCESSING SYSTEM FOR INTERACTIVE, PERSONAL AND IDIOSYNCRATIC CONTROL OF IMAGES AND DEVICES**
VERARBEITUNGSSYSTEM ZUR INTERAKTIVEN, PERSÖNLICHEN UND IDIOSYNKRATISCHEN STEUERUNG VON BILDERN UND VORRICHTUNGEN
SYSTEME DE TRAITEMENT DE COMMANDE INTERACTIVE, PERSONNELLE ET IDIOSYNCRATIQUE D'IMAGES ET DE DISPOSITIFS

(43) Date of publication of application: 12.02.2003
(73) Proprietor: Macri, Vincent J., Durham, NH 03824 (US)
(72) Inventor: MACRI, Vincent, J., Durham, NH 03824 (US); ZILBER, Paul, Plainview, NY 11803 (US)
(74) Representative: Greenwood, John David
(86) International application number: PCT/GB2000/001686
(87) International publication number: WO 2001/090869

(56) References cited:
- EP-A- 0 690 426
- WO-A1-00/17767
- WO-A1-97/40471
- WO-A2-96/22134
- US-A- 5 317 505
- US-A- 5 729 220
- US-A- 5 890 906

## Description

### Background of the Invention

Physical movement has been the subject of technologies directed to: (1) videos and other visual and/or visualization means showing how to improve motor skills by practicing actual preferred examples of movement and (2) computer and video games using movements by displayed images that are activated by game players. Neither field of technology has combined the use of real and/or simulated demonstrative images, performing real and/or simulated movements in a simulated environment, interacted with by personally and idiosyncratically controlled user controllable images. Neither field of technology provides a means by which personalized artificial intelligence is developed in a processing system apparatus based upon user controllable images performing interactively controlled simulated movements, derived from personal and idiosyncratic user inputs.

In the present invention, user controllable images, and/or devices, upon receiving apparatus processed user inputs, "acquire" and "execute" personalized artificial intelligence in the areas of decision-making, motor skills and memory, by performing movements that are controlled by said user inputs. The processing system apparatus executing so as to receive inputs (which are accepted or rejected) processes such data and produces outputs which represent displays of user controllable images. Accordingly, the present invention provides technical effects by the processing system apparatus which enable users to control user controllable images as personalized, on-screen agents which perform according to users' input controls.

User controllable image movements are controlled by user inputs, but without the user necessarily making the same or correlative physical movements as are displayed by the user controllable image or as are demonstrated by a demonstrative image (in an embodiment of the present invention displaying demonstrative images). Moreover, the present invention provides for technical effects in motivity-devices such that users interactively, personally and idiosyncratically control such user controllable motivity devices so as to cause said motivity devices to perform actual physical movements.

In computer and video game technologies, while some displayed images simulate physical movement, those images are activated by the user, for example, 10,000 game players, executing the same input activations will see 10,000 identical outputs, i.e. image movements. This makes sense in terms of providing entertainment to a mass audience. Similarly, in some expert systems computers mimic human know-how, but again the output process is not generated by user specific inputs, that are personal, idiosyncratic, interactive and capable of subsequent modifications, additions, deletions, updating, feedback and so forth.

EP-A-0,690,426 discloses a training system which has various media for interfacing with a user. A system controller uses an interface file to automatically execute action commands to perform an interfacing event. The action commands are delimited by interactivity point commands, execution of which halts an execution path and allows interactive inputs. A simulation program may then be retrieved to allow the controller to simulate interfacing of the training subject. Screen controls are dynamically linked with simulation handlers of the simulation program. They are all disconnected after use of a simulation program. US-A-5,890,906 discloses a method and apparatus having the features of the preamble of claims 1 and 14. The method and apparatus of the present invention are characterized by the features of the characterizing portions of these claims. Optional features are recited in the dependent claims.

whereas computer and video games and some expert systems are directed to creating results that mimic humans and/or human movements, the present invention is directed to using the processing system apparatus as an open knowledge base providing individual users with the means to direct user controllable images to act as personal "intelligent agents". Such "agent" action is based on the specificity and nuances of controls from each individual user. Accordingly, processing system apparatus outputs will be differentiated among users and idiosyncratic to each, individual user since such outputs are produced by an "open" knowledge base which is dependent upon personal idiosyncratic user inputs.

A processing system apparatus according to the invention may be used to receive, accept or reject inputs, store, pre-store, maintain, modify and update inputs, pre-program parameters, feedback inputs and generate outputs, in the form of movements, that are particularized to each user. Simulated movement capabilities and limits (parameters) within the professing system apparatus are constructed so as to support user controllable images by providing for: 1) maintaining processing system memory of user transmitted personal, idiosyncratic input controls that cause simulated physical movement of the user controllable image,
2) updating capability of such maintained (user controllable image) memory, 3) modifications, deletions and additions to such updated memory, 4) retaining such memory as a knowledge base upon which subsequent, additional movement recordation, may be added, 5) allowing user review, i.e. causing the processing system to repeat prior, personal, idiosyncratic user input controls resulting in user controllable image movements, 6) selecting the dimensions and characteristics (i.e. parameters) of user controllable images, 7) allowing the user to select the speed of movement and control the sequential locationing of the user controllable image, 8) establishing pre-programmed user controllable image movement limitations (i.e. physical movement parameters), 9) using a pre-programmed model of movements within the processing system apparatus, to measure user control of user controllable images,
10) establishing a means to decrease the error rate of user controllable image movement, 11) providing the user with control over the position and orientation of the user controllable image with respect to any axis, 12) allowing at least two user controllable images to interact with each other; and to so provide support in a variety of other ways and by other means.

The present invention is applicable to any user choosing to control any kind of user controllable image to simulate any physical movement in any simulated environment. The present invention may be used for learning, pre-training, amusement and the like. A user controllable image as a dinosaur may be caused to respond to the (predetermined) preferred physical movements of a demonstrative image of a dinosaur. The user controllable image as a bulldozer operator may be caused to simulate the movements of a demonstrative image operating a bulldozer in a preferred manner. A young child user learning to spell words may cause a user controllable image (in the form of one hand) to simulate the movement of alphabetized wooden blocks into a series so as to spell a word as is demonstrated by demonstrative image movements. In terms of the scope of the present invention, industrial, commercial, learning, amusement and sports are relevant areas for its application.

The present invention provides a processing system apparatus that enables displayed, user controllable images to be controlled so as to perform simulated physical movements. Said movements are derived from each user's specific interactive, personal, idiosyncratic inputs to the apparatus. Accordingly, said apparatus provides means by which each user's specific input controls become, as the apparatus executes, the simulated decision-making, motor skills and memory capabilities, i.e. the effective, personalized "artificial intelligence" of her/his user controllable image.

In addition, on behalf of each user controllable image the processing system apparatus is enabled, to receive and accept (or reject) user inputs that add to, modify or delete said simulated, physical movements which is to say that the apparatus is arranged so as to be modified as it is used by each user (i.e. receives inputs and modifies its outputs on an on-going basis). As such, the present invention is well-suited to providing users, (for example, students, learners, players, customers and the like, i.e. individuals controlling the transmission of inputs) with on-screen agents that, based on user-specific inputs perform simulated anatomical movements, "decide" on tactics and strategies and are driven by memory that is specific to and directed by each, individual user.

In an example of one embodiment of the present invention a user views a display which shows, on the left half side of the screen, a demonstrative image performing a physical movement. On the right half side of the screen is a user controllable image which moves as the user transmits inputs that cause the user controllable image to move. This simulated movement is personally and idiosyncratically directed by the user.

The user controllable image's simulated physical movements may, with respect to one or more demonstrative image(s) or another user controllable image(s), emulate the movements of said demonstrative images or cooperate with such movements or oppose them, or take some other form of movement (e.g. escape, ignore etc.). However, in all of these processes, there is a real time genesis of movement of the user controllable images, which is derived from the user. The user controllable image performs its "intelligent functions" as the on-screen, interactive, personal, idiosyncratic agent of the user.

The apparatus may also be embodied to provide such capabilities to motivity-devices such as robots, avatars or other motiles.

In the practice of the present invention, user controllable images do not simulate physical movements that are identical to one another. The timing, sequence, coordination, attitude (to an axis), force, balance, stride, trajectory swing and so forth of each user controllable image's simulated movements will be as differentiated as are the inputs of each user.

The combination of user-specific input interactivity with user controllable images, and personal and idiosyncratic inputs, represents a personalized artificial intelligence within the apparatus, i.e. the derived decision-making, motor and memory skills of each user controllable image is transferred to a display which generates images and updates the display, on an on-going basis, to represent movement. This process provides a form of artificial intelligence (effectively, simulated decision-making, motor skills and memory (as an open knowledge base that is updated based on successive additions, deletions and/or synchronously interwoven user-specific inputs) to the user controllable image (and motivity-devices) and further distinguishes the present invention from the prior art.

Particular features of the present invention may include:
(1) differentiated idiosyncratic inputs from each user,
(2) variable idiosyncratic outputs to each user,
(3) personal and idiosyncratic inputs forming individualized, integral components of the knowledge base within the processing system apparatus for each user,
(4) outputs specific to each user's directed input controls to each user controllable image,
(5) development of personalized artificial intelligence in the form of simulated "memory", "decision-making" and "motor skills",
(6) simulated learning by the open knowledge base, from user-specific inputs,
(7) learning by the user from feedback from the processing system apparatus, and
(8) the processing system apparatus provides the capacity to users to create user-specific visual effects from user-specific inputs.

### Brief Description of the Drawings

Drawings are not necessarily to scale, emphasis instead generally being placed upon illustrating the principles of the invention.
FIGs. 1 and 2 are pictorial diagrams of users interacting with embodiments of the invention.
FIG. 3 shows a user using a virtual reality input device.
FIG. 4 illustrates user control of a particular, simulated anatomical area.
FIG. 5 is a pictorial diagram of a user interacting with an alternative, opposing embodiment of the invention.
FIG. 6 shows a legless user controlling simulated legs
FIG. 7 shows an armless user controlling simulated arms.
FIGs. 8A and 8B contain pictorial diagrams of two users interacting with another alternative embodiment of the invention.
FIG. 9 is a schematic pictorial diagram of another alternative embodiment of the invention used in conjunction with the worldwide Internet.
FIG. 10 illustrates control of a previously living image.
FIG. 11 illustrates control of a mechanical system.
FIG. 12 shows user control of objects.
FIG. 13 is a block diagram of a processing system apparatus constructed according to the present invention.
FIGs. 14A-F contain flowcharts of the logical flow of the system of the present invention for preparation and operation of the processing system apparatus.

### Detailed Description of the Invention

A processing system apparatus provides technical means to users to engage in activities relating to simulated movement. Purposeful movement involves no fewer steps than: perception, visualization, action, feedback and generally repetition. The present invention provides a means by which a simulation of such real steps is engaged in by users using a processing system apparatus. Users thereby learn, pre-train and/or are amused by the process of movement and its results.

The scope of application of the present invention includes any activity, real or otherwise, in which the user sends input controls to a processing system apparatus so as to control displayed images (and/or devices having motivity). The processing system apparatus is arranged such that inputs received from the user are converted into outputs displayed as user controllable images (and/or devices) executing movements as the personal, idiosyncratic, simulated agents of users.

Images (and/or devices) moving as such agents of users will perform simulated (and/or actual physical) movements that accomplish a desired result of the user. However, the apparatus is further arranged so that it executes desired, simulated (and/or physical) movements without requiring that the user execute anatomical, physical movements that are the same as those performed by the image (and/or device). Further, if a demonstrative image were to be displayed, the user is provided with means to have the user controllable image interact with said demonstrative image without the requirement that the user make the same, anatomical, physical movement as made by the demonstrative image.

One technical effect achieved by the processing system apparatus is to provide the user with a means by which the user transfers his/her personal, idiosyncratic capabilities in the areas of decision-making, simulated motor skills and memory related to movement, to an open knowledge base of the processing system apparatus. The apparatus receives such inputs, processes and converts them into outputs, displayed as user controllable images so that said images, as constructed by the apparatus, perform in the user's fashion and with user-specific nuances, techniques and characteristics of performance.

Further, technical effects of the apparatus include the features of providing users with opportunities to review displayed movements so as to modify those movements, to add prior, or posterior synchronous movements, or to replace them with new movements and to add successive levels of movements which render the user controllable image capable of performing more complex simulated movements. Therefore, user controllable images acquire the user's "intelligence" in the form of simulated decision-making, motor skills and memory related to movement. Just as the user is enabled to change, modify, augment, and delete (and so forth) his/her movements in real life, without the use of the apparatus, the apparatus provides a means by which the user may accomplish simulated functions in a simulated environment using user controllable images. In another embodiment of the invention the processing system apparatus is used in conjunction with robots, avatars and the like.

The processing system apparatus receives personal, idiosyncratic inputs from each user. Such inputs cause user controllable images to move in a user controlled fashion. These inputs may, at any point in time, be concurrent with, prior to or subsequent to other recorded inputs. This input supply to an open knowledge base will, as the user provides further inputs, represent modified user skill levels (as illustrated by displayed movements of the user controllable image), add new movement skills that are executed simultaneously with existing skills, add new skills movements that precede or follow other user skill movements and the like. The entire input process represents "building"/"modifying" components in the creation/maintenance of an idiosyncratic, open knowledge base within the processing system apparatus that is personal and specific to each individual user. In effect, the user with technical support from the present invention is "using", "learning from" and "playing with" his/her personal, idiosyncratic knowledge base as provided by the technical effects of the processing system apparatus. The apparatus provides user capability to create user-specific, updated visual effects from user-specific inputs.

The figures illustrate the invention as follows:

### Detailed Description of the Drawings

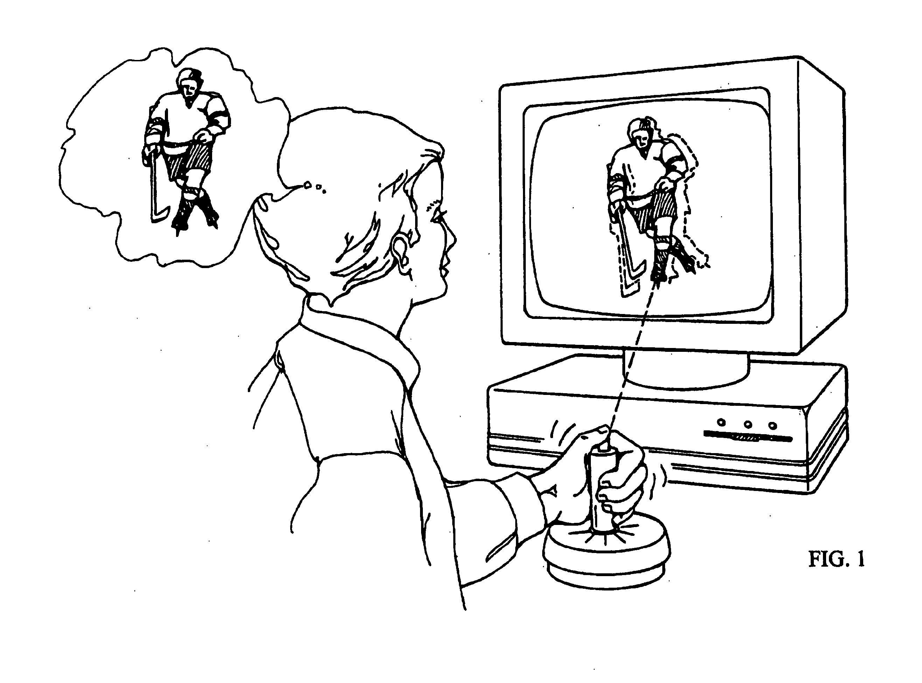

FIG. 1 is an illustration of a user causing a user controllable image to perform a simulated physical movement.

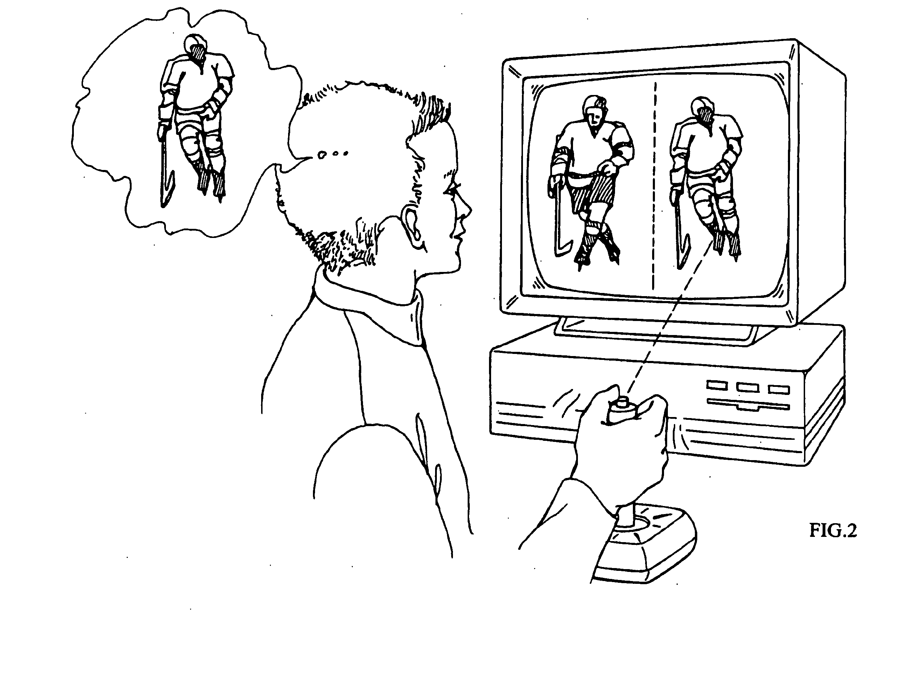

FIG. 2 shows a single user using an embodiment of the invention. The user supplies inputs via a hand-held joystick to manipulate an adopted user controllable image on the right side of the screen to approximate movement of an image of an instructive, preprogrammed figure on the left side of the screen. The user views the preprogrammed image, recognizes what is being demonstrated, visualizes the performance of the maneuver, makes cognitive choices and decisions (including considering options) then manipulates the adopted user controllable image on the right side of the screen to achieve the instructed desired result.

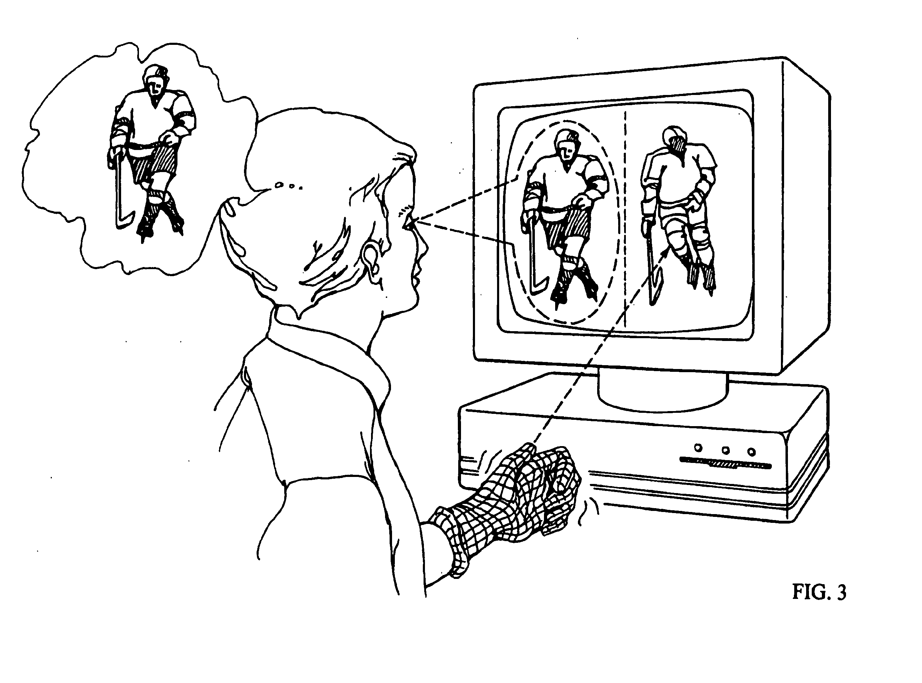

FIG. 3 shows a user causing a user controllable image to emulate the movements of a demonstrative image using a virtual reality glove.

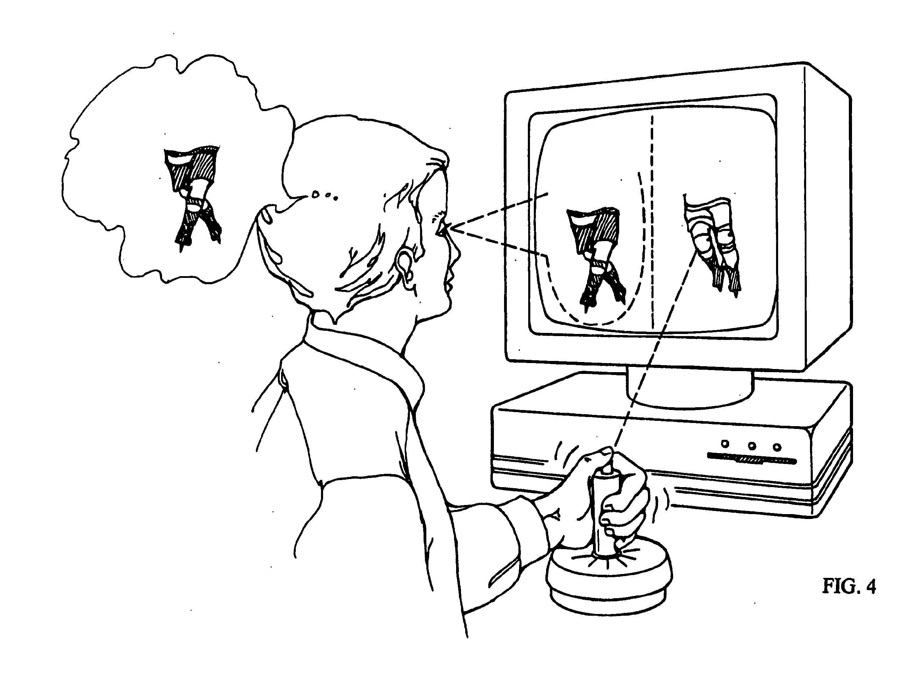

FIG. 4 illustrates the user controlling a user controllable image which displays approximately one half of a human body.

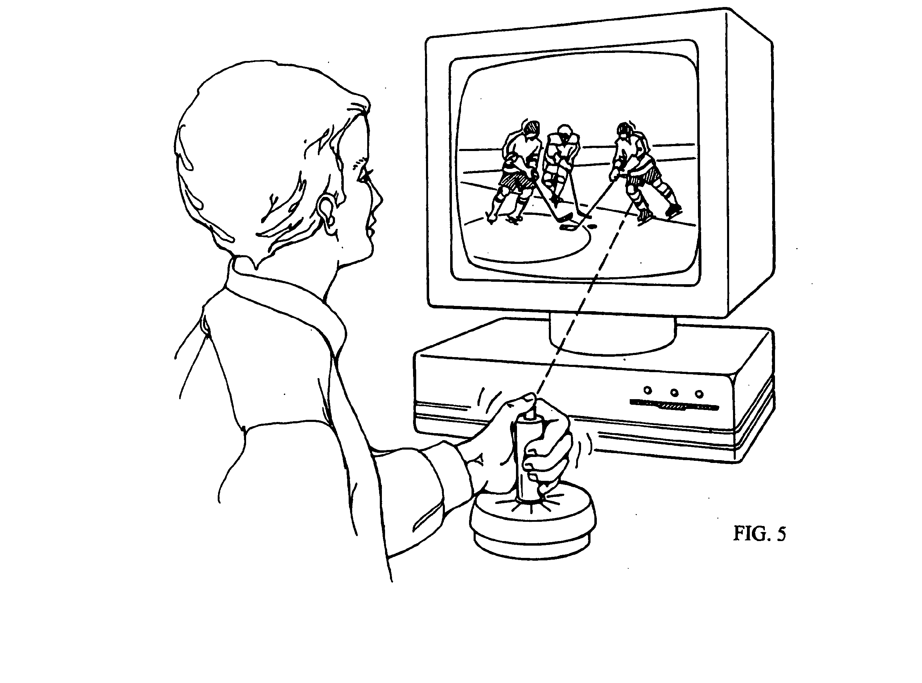

FIG. 5 shows another single user interfacing with the computer system of the invention. In this embodiment, the user, in a competitive setting, is in opposition to two preprogrammed images.

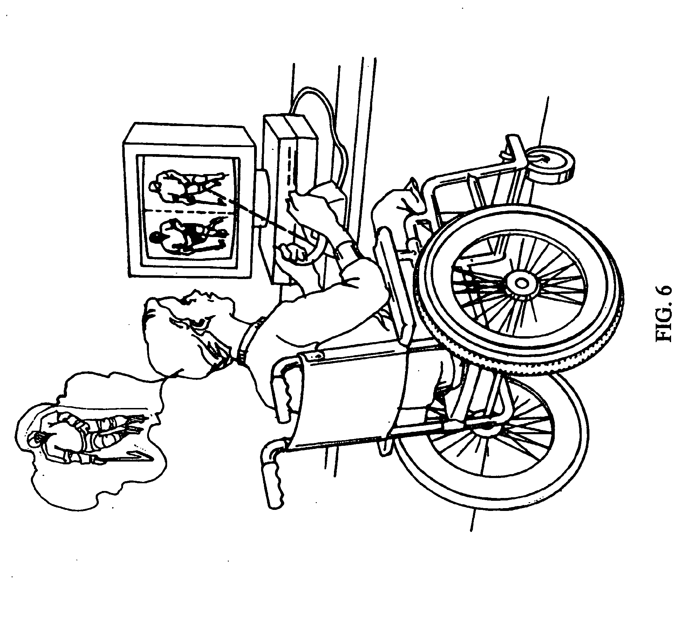

FIG. 6 is an illustration of a legless user controlling the displayed image of the legs of a user controllable image.

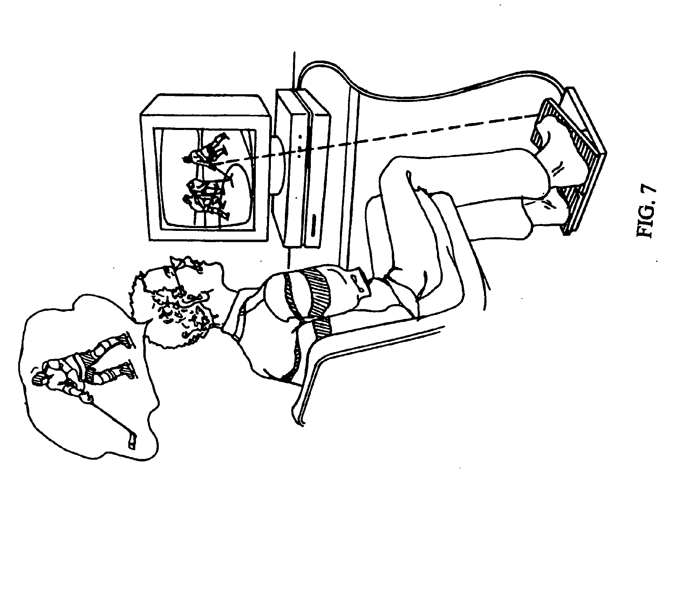

FIG. 7 shows an armless user controlling the arms of a user controllable image.

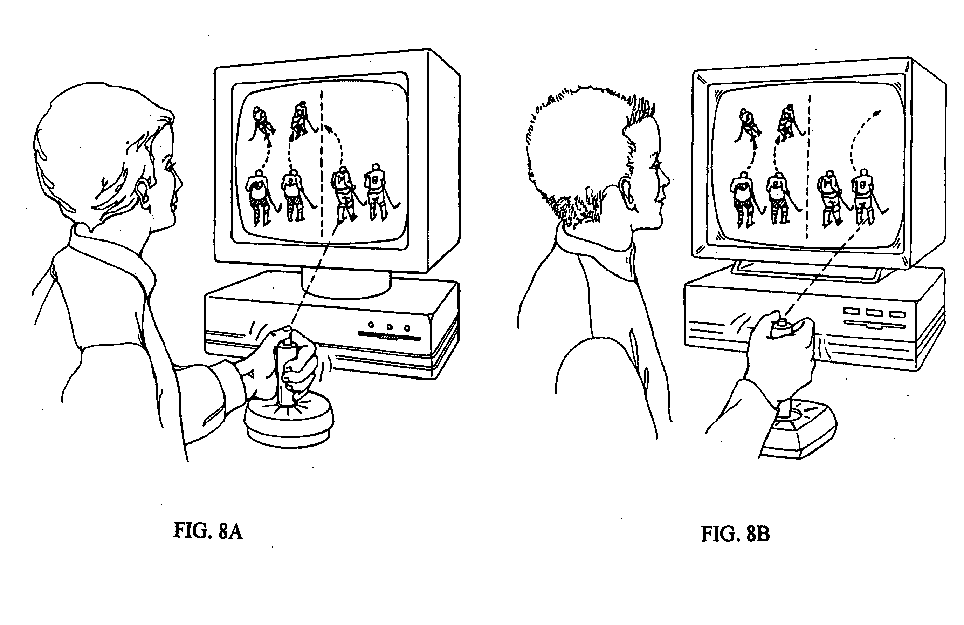

FIGs. 8A and 8B show two users using the invention simultaneously on two different computers which are networked together.

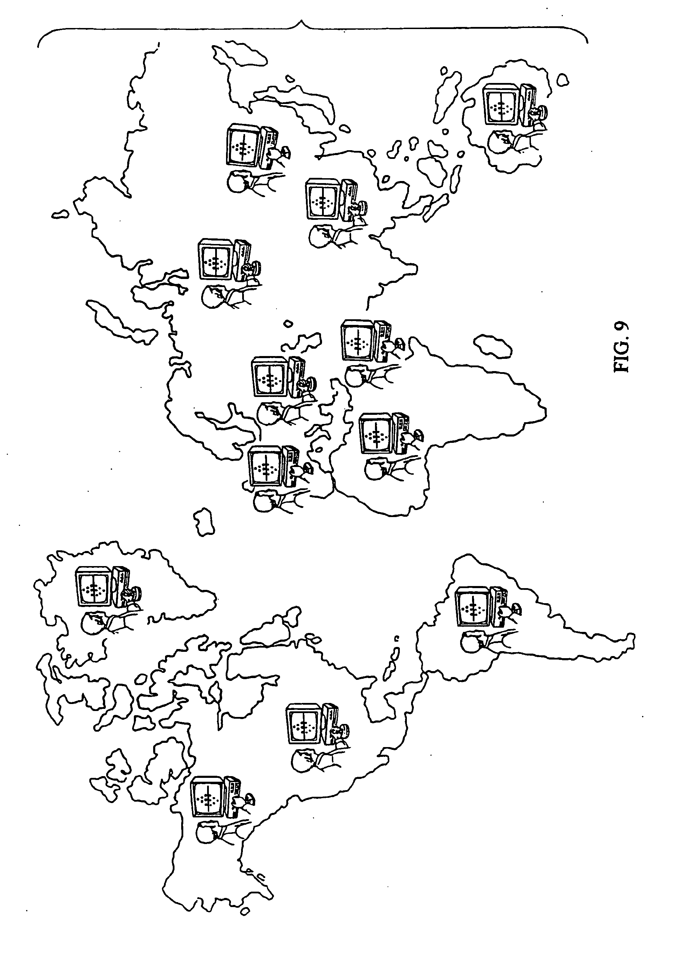

FIG. 9 is a schematic pictorial depiction of the invention being used by multiple users simultaneously with the systems being connected over the worldwide Internet.

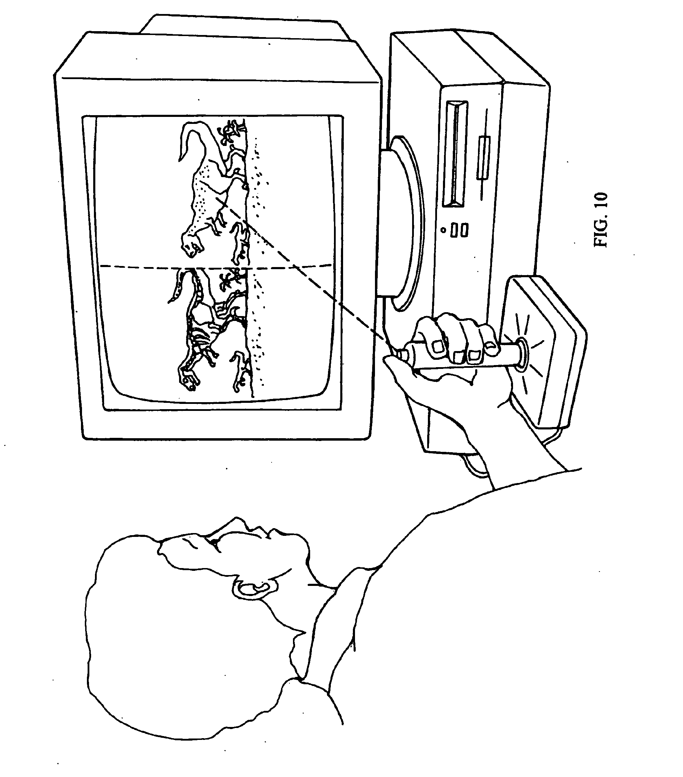

FIG. 10 shows control of a previously living user controllable image entity.

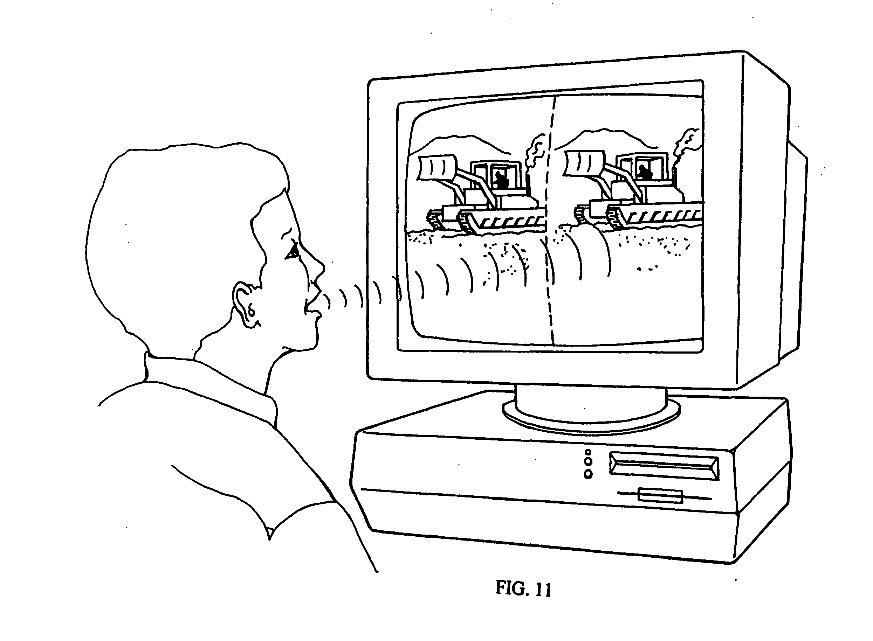

FIG. 11 shows a user controllable image system entity.

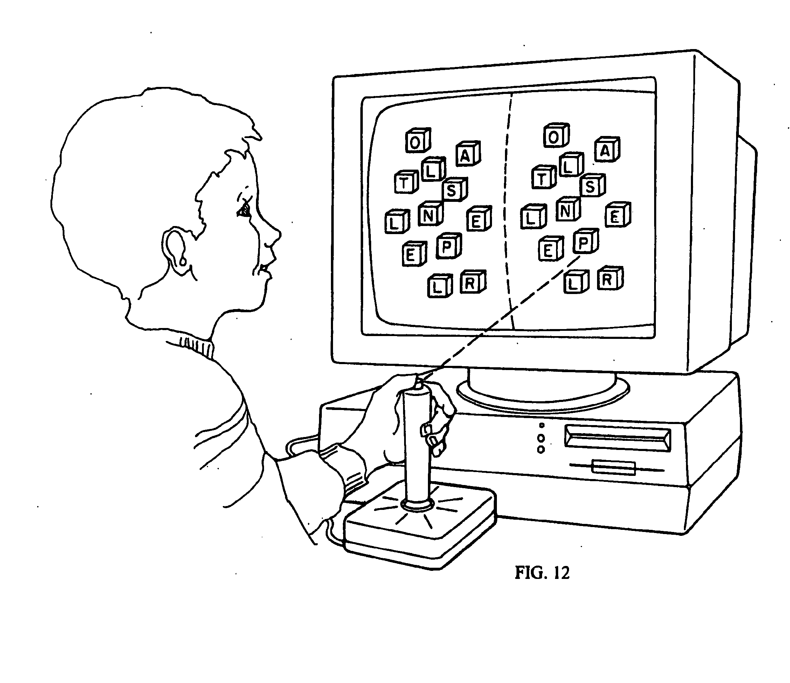

FIG. 12 shows a user controllable image object entity.

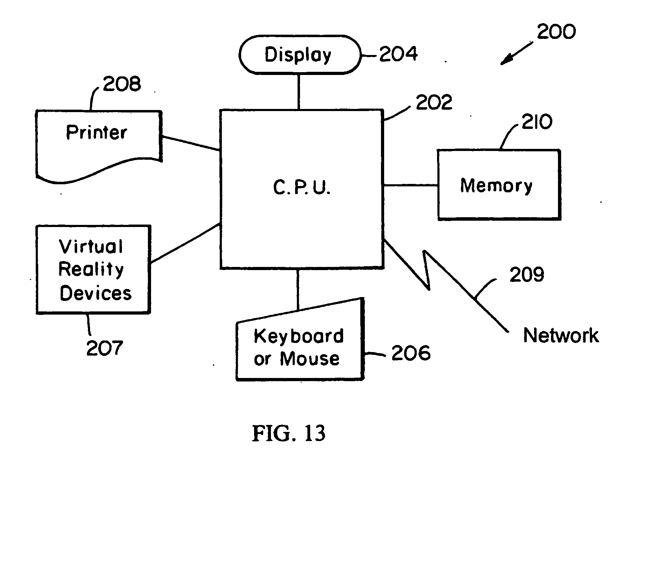

FIG. 13 contains a block diagram, of one embodiment of the computer system 200 of the invention for simulating physical activities such as skating and hockey maneuvers and for entertainment use according to the present invention. The system comprises a central processing unit (CPU) 202 which can be, but is not limited to, a personal computer or handheld device. The CPU 202 is coupled to a display 204, such as a CRT screen, for displaying images and prompting the user for the input of information. The CPU 202 is also coupled to an input device or devices 206 such as a keyboard, joystick, etc., for the input of information from the user, an optional printer 208 for printing information such as player/student accomplishment information in hard-copy media and an optional network connection 209 for internet access and/or multi-user operation. Input and output with the user can also be accomplished with virtual reality devices 207 such as a virtual reality glove and/or helmet worn by the user. A memory 210 is provided, coupled to the CPU 202, for the storage of program instructions, data and knowledge base recorded images and other information.

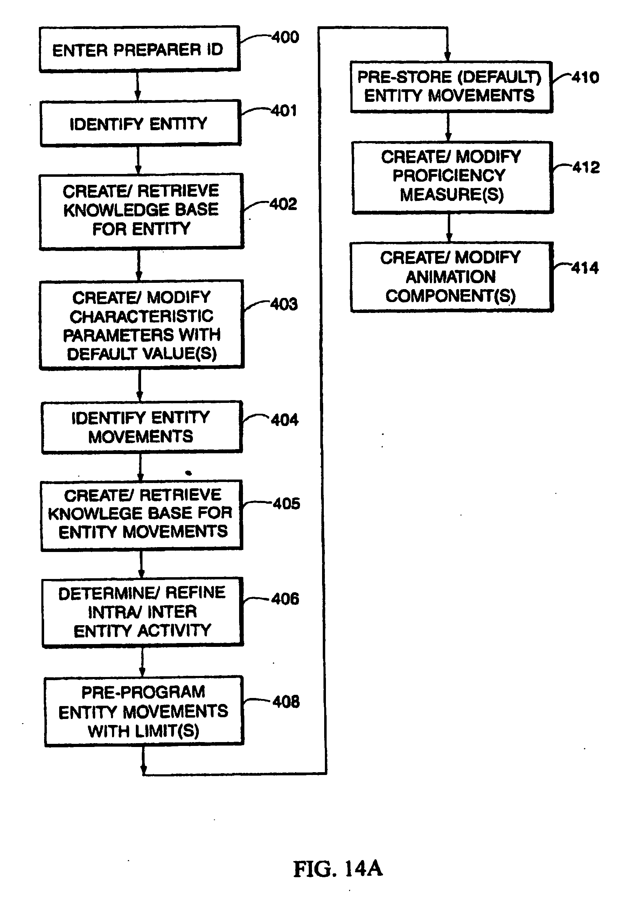

FIGS. 14A - 14F contain flowcharts which illustrate the logical flow of the computer system(s) used for the preparation and operation of the method of the present invention. FIG. 14A shows the procedure used for prepaying the method to create/modify an entity to perform the simulated physical movements of the activity. Such preparation is performed upon a computer system 200 like, but not necessarily the same one as the computer system 200 used for operation of this processing system apparatus.

Step 400 requires the preparer, e.g. an instructor or coach or the like, usually not the same individual as the user referenced elsewhere, to enter into the processing system by identifying himself/herself. This identification is used for access verification/validation.

Step 401 requires the method to identify the entity being created. This may be any previously living thing, presently living thing, object, system or some fanciful entity. For the entity in question, the next step 402 creates (for a new entity) or retrieves (for an established old entity) a knowledge base describing the entity identified in the previous step 401.

Step 403 creates characteristic parameters of the entity identified in step 401 and movements identified in step 404. These parameters are also given default (initial) values which the user may select to change at a later time. Parameters of the entity may include such things (where applicable) as size, weight, handedness, etc. Parameters of the movement(s) may include such things (where applicable) as number of fingers, finger size (related to entity size) and specific ability for movements (number of joints).

Step 404 is to identify the movements used to perform the simulated physical movements of the entity. These may be wholly new movements for the entity or refinements to previously created entity movements.

Step 405 creates (for a new entity movement) or retrieves (for an old entity movement) a knowledge base describing the entity movement identified in the previous step 404. This entity movement knowledge base is used by the processing system apparatus to provide form for and initialize content of the user-specific knowledge base of entity movement(s) until such time as each user has exercised this processing system apparatus to establish user-specific, idiosyncratic movement(s). This knowledge base of entity movement(s) is organized in a fashion similar to an orchestral music score or to a choreographic script describing the movements of a dance troupe.

Step 406 defines the combinations of movements which combine to perform the simulated, physical movements of the activity. Some (intra) movements relate to self relative movements of the entity (close the fingers into a fist) while other (inter) movements relate to external movements of the entity (strike something with a fist).

Step 408 defines pre-programmed movements along with their limits, such as the finger joint can move from 0 to 90 degrees (but not from -90 to 90 degrees). The user cannot later change these, though some limits may be specified as changeable parameters (Step 404).

Step 410 defines pre-stored movements such as (all) fingers close together at such and such a rate of closure. It is expected that the processing system will define pre-stored movements as the user reaches an exercise of specific simulated movement in his/her progression through the activity. Further exercise of the specific movement will allow the user to refine the pre-stored movement to the user's own idiosyncratical style.

Step 412 defines the means by which a proficiency measure for each movement may be made, e.g. the rate and degree to which closure of the fingers is achieved. In addition, overall proficiency measures are defined as summations of individual movement proficiency measures.

The last step 414 of creating/modifying an entity defines the methodology of combining the parameters, limits and movements to construct the components by which the processing system can display image representing the resultant simulated movement. These components will be used to display all or part of the user controllable image, to perform the movement (s) and to present the display from an arbitrary point of view.

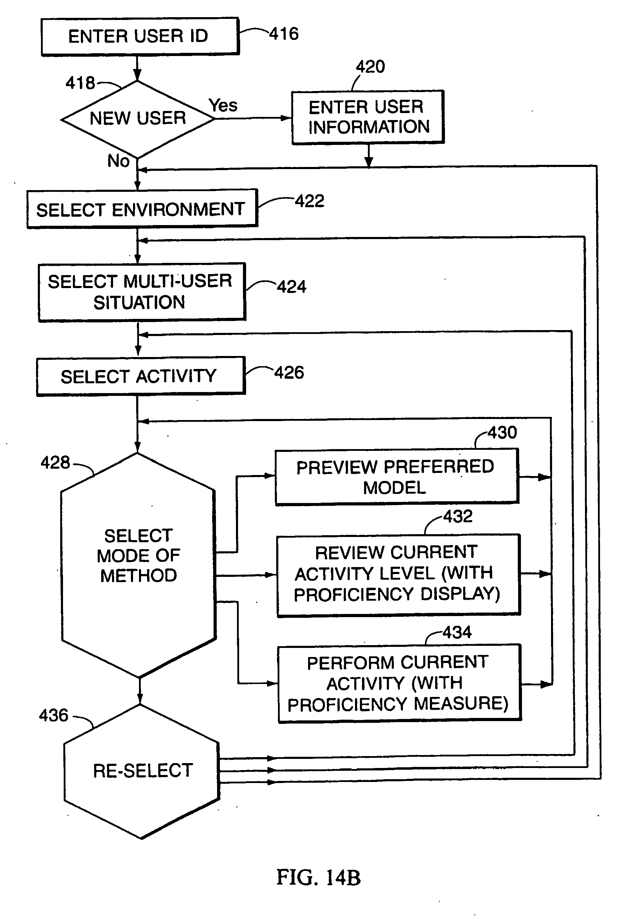

FIG. 14B shows the procedure used for operating the method of the present invention. Step 416 allows a user to enter into the processing system by identifying himself/herself. This identification is later used to identify the specific user's parameters and pre-stored movements, distinguishing the user from other users of the processing system method. If the user is new to the system, step 418, their user specific information is specified in step 420. In step 422 the user selects the environment (world) he/she will participate (what kind of entity bulldozer, microbe, living thing he/she wishes to be). In step 424, the user selects the form of instruction coached/taught/self directed, independent, cooperative with other user, intranet/internet accessed, etc.) he/she wishes.

In Step 426, the user selects the specific interactive simulated physical movement which is to become the object of the instructional session. For the activity, the user selects, in step 428, how the user wishes to participate in the activity. Step 430 allows the user to preview the (pre-programmed) model of the preferred performance of the activity. Step 432 allows the user to review the current level of achievement (pre-stored and pre-programmed) the user has reached in the performance of the activity. Also provided to the user is a proficiency measure related to the idiosyncratic pre-stored simulated physical movements the user has previously demonstrated in the activity. Step 434 allows the user to perform the simulated physical movements of the activity so as to define or refined the idiosyncratic pre-stored simulated physical movements of the activity.

Step 436 allows the user to go back and change any of the earlier selections made by the user, e.g. go from coached to self directed study, or change the specified activity, etc. Also provided in step 436 would be the ability of the user to pause (a stop) to eat or take care of other individual needs.

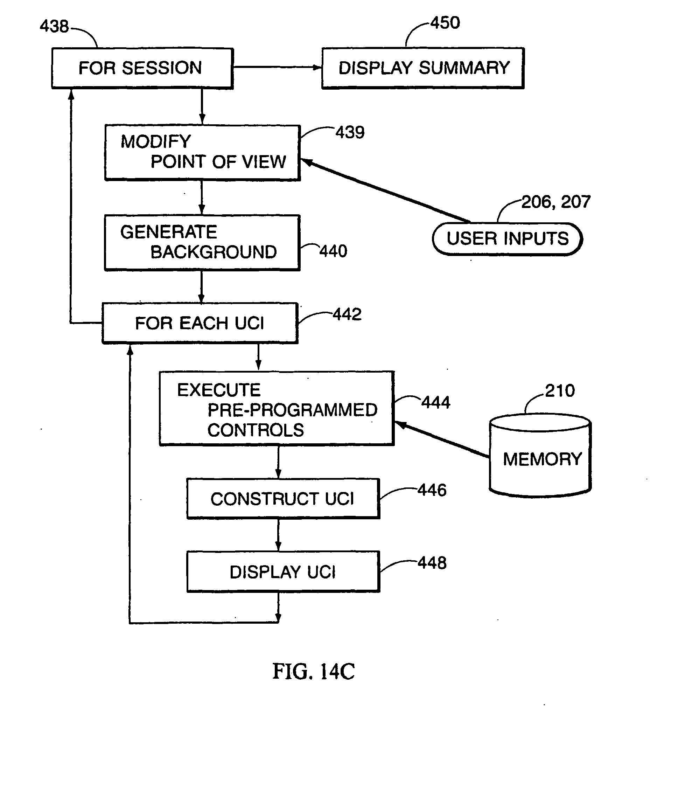

FIG. 14C shows the procedure (sub-routine) of FIG. 14B Step 430 - the user selects to preview the (pre-programmed) model of the preferred performance of the simulated physical movements of the activity. For the duration of the preview session, step 438, the method performs the following steps (until completion or termination as indicated by the user). Some (optional) user inputs may be used to change the display point of view (position and/or orientation with respect to display axes) in step 439. This corresponds to moving and orienting the camera through which the user views the display.

In Step 440, a background image is retrieved/constructed to reflect the environment, multi-user situation and activity choices of the user. For each uci involved in the activity (as previously selected), step 442, the method performs the following steps. Step 444 executes the pre-program of movements of the activity. Step 446 constructs a uci reflecting the pre-programmed movements by executing the defined methodology of preparation step 414. The resultant uci is displayed in step 448 (with the background from step 440 and other step 448 uci's). Where the total number of uci's have been included in the display, the preview continues with step 438. When the preview is complete, or complete to the user's satisfaction, step 438 terminates and any results (length of session, activity result measure (impact of striking fist), number of resultant movements, etc.) a summarized to the user in step 450. Method flow then reverts (returns) to FIG. 33B step 430.

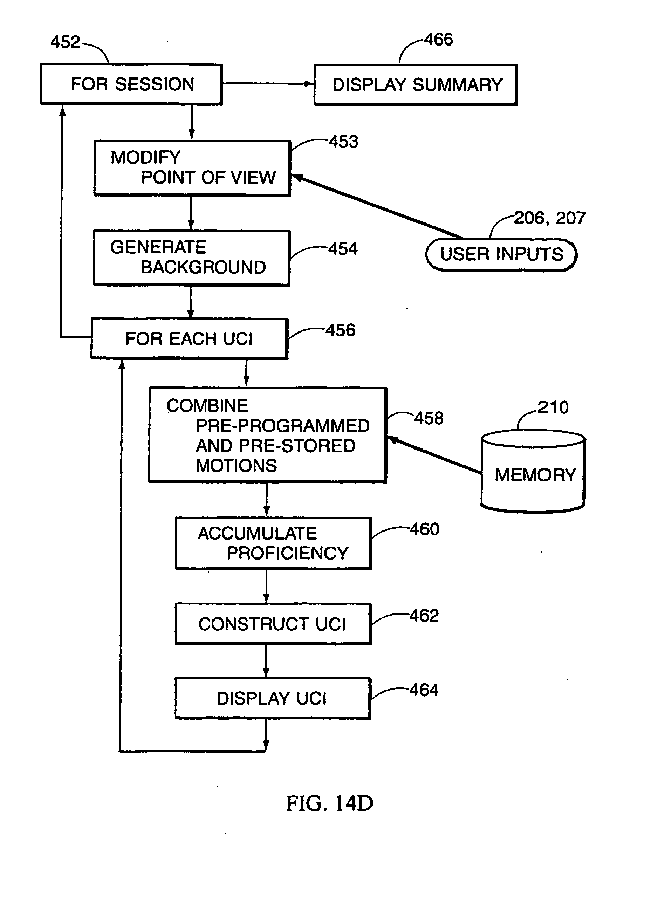

FIG. 14D shows the procedure (sub-routine) of FIG. 14B step 432 - the user selects to review his/her current level of achievement (pre-stored and pre-programmed) the user has reached in the performance of the activity. For the duration of the review session, step 452, the method performs the following steps (until completion or termination is indicated by the user). Some (optional) user inputs may be used to change the display point of view (position and/or orientation with respect to display axes) in step 453. This corresponds to moving the camera through which the user views the display. In step 454, a background image is retrieved/constructed to reflect the environment, multi-user situation and activity choices of the user. For each uci involved in the activity (as previously selected), step 456, the method performs the following steps. Step 458 executes the pre-programmed movements as modified by the user's idiosyncratic pre-stored movements of the activity. In step 460, the processing system accumulates a proficiency measure as defined in FIG. 33A step 412. Step 462 constructs a uci reflecting the pre-programmed controls as combined with the pre-stored movements in step 458. The resultant uci is displayed in step 464 (with the background from step 454 and other step 464 uci's). When the total number of uci's has been included in the display, the review continues with step 452. When the review is complete (or complete to the user's satisfaction), step 452 terminates and any results (length of session, proficiency measures, etc.) are summarized to the user in step 466. Method flow then reverts (returns) to FIG. 14B step 432.

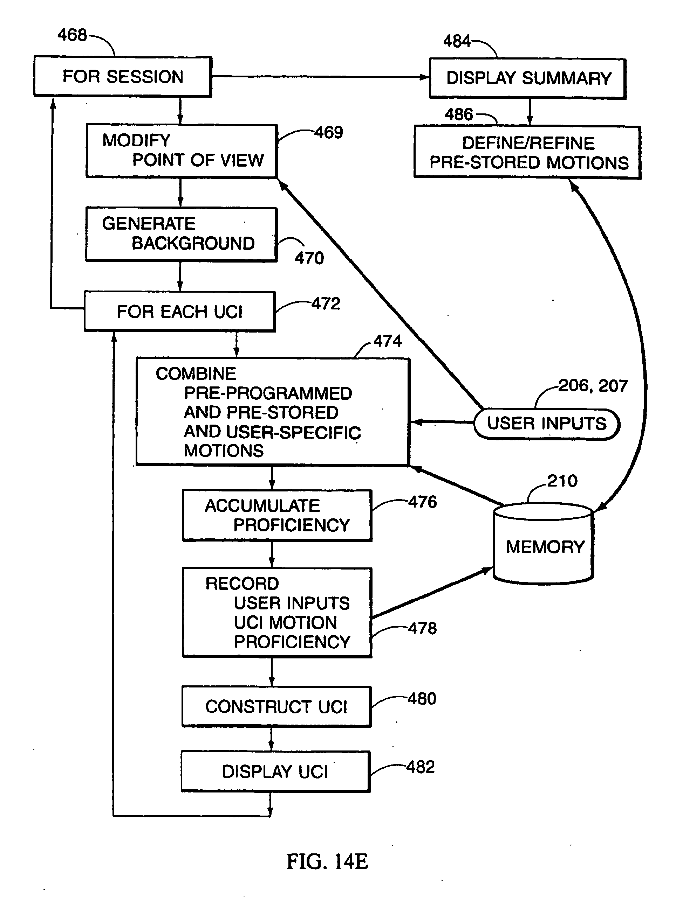

FIG. 14E shows the procedure (sub-routine) of FIG. 14B step 434 - the user selects to perform (user inputs and pre-stored movements and pre-programmed controls) to define or refine his/her simulated physical movements. For the duration of the perform session, step 468, the method performs the following steps (until completion or termination as indicated by the user). Some (optional) user inputs may be used to change the display point of view (position and/or orientation with respect to display axes) in step 469. This corresponds to moving and orienting the camera through which the user views the display. In step 470, a background image is retrieved/constructed to reflect the environment, multi-user situation and activity choices of the user. For each uci involved in the activity (as previously selected), step 472, the method performs the following steps. step 474 executes the pre-programmed movements as modified by the user idiosyncratic pre-stored movements as modified/augmented by the user input controls. In step 476, the processing system accumulates a proficiency measure as defined in FIG. 33A step 412. Step 478 records the user input controls, uci movement(s) and proficiency measure in the memory means of the processor system. Step 480 constructs a uci reflecting the pre-programmed controls and the pre-stored movements as combined with the current user input controls in step 474. The resultant uci is displayed in step 482 (with the background from step 470 and other step 482 uci's). Where the total number of uci's has been included in the display, the performance session continues with step 468. When the performance session is complete (or complete to the user's satisfaction), step 468 terminates and any results (length of session, proficiency measure, profieiency measure improvement, etc.) are summarized to the user in step 484. In step 486, the resultant uci movements can be used to replace pre-stored default movements (FIG. 14A step 410) with the user's idiosyncratic movements (to define a new baseline of performance) the first time a user exercises the specific movement, or to refine the user's idiosyncratic pre-stored movement (history). The generalized step of refining the user-specific pre-stored movements is to integrate the past pre-stored movements with the present transmitted user controls into future pre-stored movements. Algorithms for performing this refinement include (but is not limited to):
- maintaining user-specific pre-stored movement summary
- using full or truncated movement history
- using running or weighted averaging
- using best fit with/without discards
- using noise reduction
- using position and/or frequency smoothing
- using predictive/non-predictive techniques
- using established artificial techniques

### Method flow then reverts (returns) to FIG. 14B step 434.

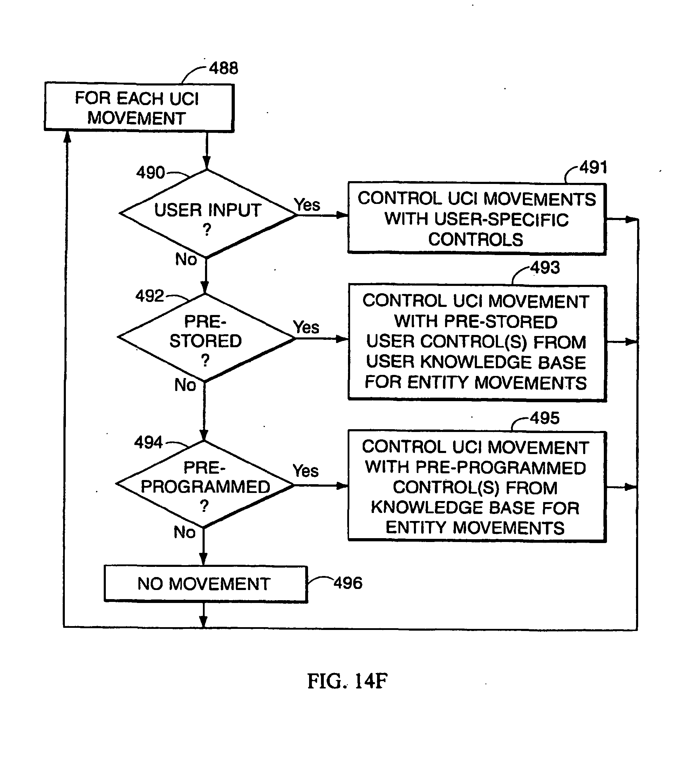

FIG. 14F details the procedure (sub-routine) of FIG. 14C Step 444, FIG. 14D step 458 and FIG. 14E step 474 - the combining of pre-programmed movements and pre-stored movements and user transmitted controls. For each user controllable image movement, as created in FIG. 14A step 404 and entered into the knowledge base of entity movement(s) in FIG. 14A step 405, the three contributions to entity movement are processed in priority order. First, if the user is exercising the user controllable image movement 490 with user input control(s) they are used to control the user controllable image movement 491. In the absence of current user input control(s) 492 a pre-stored summarization of past user controls (as entered into the user-specific knowledge base of entity movement) 493. The summary of user-specific controls of user controllable image movements is maintained in FIG. 14E step 486 - define/refine pre-stored movements. In the absence of both current and past user input control(s) 494, the preprogrammed (control) movement(s) (as entered into the knowledge base for entity movement(s) in FIG. 14A step 405) are used to control the user controllable image movement 495. This step 495 reflects the condition of the processing system apparatus controlling entity movement when the user has not yet taken the opportunity to exercise that portion of the entity movement. In the absence of all controls, the entity movement is non present 496. When all user controllable image movement(s) have been controlled, the procedure (sub-routine) returns to FIG. 14D step 486.

Several embodiments are encompassed by the present invention. Each version varies in complexity as each is directed toward a player/student at a different level of expertise. Versions developed for home, rink, and arcade use are instructional as well as entertaining. More complex versions for use in structured training facilities are developed. For each version, the computer system stores a series of lessons and corresponding "ideal" images in a database.

## Claims

1. A method of providing at least one user with at least one user controllable image for simulating physical movements, said method comprising the steps of:
generating, storing and maintaining in a memory means (210) of a processing system apparatus (200) at least one user controllable image responsive to inputs from said at least one user, said user controllable image being constructed to perform movements which simulate physical movements instead of said at least one user performing corresponding actual physical movements;
receiving, at said processing system apparatus, said inputs(206) from said at least one user to control said at least one user controllable image;
sending outputs from said memory means, such that said constructed user controllable images performs said simulated movements on a display means (204); the method being **characterized by**:
said inputs being input controls;
maintaining a maintained record being a pre-stored summarization of past user controls together with pre-programmed controls for constructing image movements which maintained record is retained as an antecedent maintained record for modification by subsequent user input controls; and
synchronously augmenting the maintained record by replacing the maintained record by a new record being the maintained record which has been integrated with subsequent input controls input by said at least one user, thereby obtaining a maintained record that is idiosyncratic of the user.

2. The method of claim 1, further comprising a step of allowing said at least one user to select to review said user controllable image movements from said maintained records.

3. The method of claim 1, further comprising a step of receiving input to provide selected, characteristic parameters of said user controllable image.

4. The method of claim 1, further comprising a step of receiving input to select the displayed speed of movement of said user controllable image.

5. The method of claim 1, wherein said user controllable image movements are restricted by pre-programmed movement limits such that said user controllable image performs said movements within the boundaries of said pre-programmed movement limits.

6. The method of claim 1, wherein said step of providing input means further comprises the steps of:
providing input means (206) to allow said at least one user to specify the position of said user controllable image with respect to any axis; and
providing input means (206) to allow said at least one user to specify the orientation of said user controllable image with respect to any axis.

7. The method of claim 1, wherein said step of generating, storing and maintaining said constructed user controllable image such that its movements are derived from at least one of pre-stored idiosyncratic movements and pre-programmed controls.

8. The method of claim 1, wherein said step of generating, storing and maintaining said constructed user controllable images further comprises input means (206) by which at least two user controllable images interact with each other.

9. The method of claim 1, wherein said step of sending outputs of said user controllable image to said display means comprises using at least one of recorded and live video images.

10. An apparatus for providing at least one user with at least one user controllable image for simulating physical movements, comprising a processing system apparatus including:
means arranged to generate, store, and maintain in a memory means (210) of a processing system apparatus (200), at least one user controllable image responsive to inputs from said at least one user so that said user controllable images are constructed to perform said simulated movements instead of said at least one user performing corresponding actual physical movements;
means arranged to receive inputs (206) from said at least one user to control said at least one user controllable image;
means arranged to send outputs from said memory means, so that said constructed user controllable images perform said simulated movements on a display means (204); the apparatus being **characterized by**:
means arranged to maintain a maintained record being a pre-stored summarization of past user controls for constructing image movements which maintained record is retained as an antecedent maintained record for modification by subsequent user input controls; and in that
the processing system apparatus is arranged to synchronously augment the maintained record by replacing the maintained record by a new record being the maintained record which has been integrated with subsequent input controls input by said at least one user, thereby obtaining a maintained record that is idiosyncratic of the user.

11. The apparatus of claim 10, further comprising means arranged to allow said at least one user to select to review said user controllable image movements from said maintained records.

12. The apparatus of claim 10, further comprising means arranged to receive input to provide selected, characteristic parameters of said user controllable image.

13. The apparatus of claim 10, further comprising means arranged to receive input to select the displayed speed of movement of said user controllable image.

14. The apparatus of claim 10, wherein said processing system apparatus (200) is arranged to restrict said user controllable image movements by pre-programmed movement limits such that the said user controllable image performs said movements within the boundaries of said pre-programmed movement limits.

15. The apparatus of claim 10, wherein said means arranged to provide input is further arranged to allow said at least one user to specify the position of said user controllable image with respect to any axis and allow said at least one user to specify the orientation of said user controllable image with respect to any axis.

16. The apparatus of claim 10, wherein said processing system apparatus is arranged to construct said user controllable image such that the movements are derived from at least one of pre-stored idiosyncratic movements and pre-programmed controls.

17. The apparatus of claim 10, wherein said processing system apparatus means are arranged to construct said user controllable images further comprises input means (206) by which at least two user controllable images interact with each other.

18. The apparatus of claim 10, wherein said output means are arranged to display said user controllable image comprises using at least one of recorded and live video images.

## Patentansprüche

1. Ein Verfahren, um zumindest einem Benutzer mindestens ein vom Benutzer steuerbares Bild zur Simulation von Körperbewegungen zur Verfügung zu stellen, wobei besagtes Verfahren die folgenden Schritte umfasst:
- Erzeugen, Speichern und Pflegen in einer Speichereinrichtung (210) eines informationsverarbeitenden Geräts (200) mindestens eines vom Benutzer steuerbaren Bildes, das auf Eingaben von besagtem mindestens einem Benutzer reagiert, wobei jenes vom Benutzer steuerbare Bild so konstruiert ist, dass es Bewegungen ausführt, die Körperbewegungen simulieren, ohne dass besagter mindestens eine Benutzer die entsprechenden Körperbewegungen tatsächlich ausführt;
- Empfangen besagter Eingaben (206) von besagtem mindestens einem Benutzer in jenem informationsverarbeitenden Gerät, um das besagte, mindestens eine vom Benutzer steuerbare Bild zu steuern;
- Senden von Ausgaben von besagter Speichereinrichtung, so dass jene konstruierten und vom Benutzer steuerbaren Bilder besagte simulierte Bewegungen auf einem Display (204) ausführen, wobei das Verfahren **dadurch gekennzeichnet ist, dass**:
. es sich bei besagten Eingaben um Eingabesteuerbefehle handelt,
. eine Aufzeichnung aufbewahrt wird, die eine vorher abgespeicherte Zusammenfassung von früheren Benutzer-Steuerbefehlen zusammen mit vorprogrammierten Steuerbefehlen darstellt, um daraus Bildbewegungen zu konstruieren, wobei die aufbewahrte Aufzeichnung als vorhergehende aufbewahrte Aufzeichnung gespeichert wird, um sie durch nachfolgende Benutzer-Eingabebefehle verändern zu können; und dass
. die aufbewahrte Aufzeichnung gleichzeitig erweitert wird, indem die aufbewahrte Aufzeichnung durch eine neue Aufzeichnung ersetzt wird, die ihrerseits die aufbewahrte Aufzeichnung ist, in welche die nachfolgenden, von besagtem mindestens einem Benutzer eingegebenen Eingabesteuerbefehle integriert wurden, wodurch eine für den betreffenden Benutzer idiosynkratische aufbewahrt Aufzeichnung entsteht.

2. Verfahren nach Anspruch 1, das desweiteren einen Schritt beinhaltet, mit dem besagter mindestens eine Benutzer sich die vom Benutzer steuerbaren Bildbewegungen aus besagten aufbewahrten Aufzeichnungen anzeigen lassen kann.

3. Verfahren nach Anspruch 1, das desweiteren einen Schritt beinhaltet, mit dem Eingaben entgegengenommen werden, um ausgewählte, charakteristische Parameter des besagten vom Benutzer steuerbaren Bildes bereitzustellen.

4. Verfahren nach Anspruch 1, das desweiteren einen Schritt beinhaltet, mit dem Eingaben entgegengenommen werden, um die angezeigte Bewegungsgeschwindigkeit des besagten vom Benutzer steuerbaren Bildes auszuwählen.

5. Verfahren nach Anspruch 1, bei dem die Bewegungen besagten vom Benutzer steuerbaren Bildes durch vorprogrammierte Bewegunggrenzen eingeschränkt sind, so dass besagtes vom Benutzer steuerbare Bild die Bewegungen innerhalb jener vorprogrammierten Bewegungsgrenzen ausführt.

6. Verfahren nach Anspruch 1, bei dem besagter Schritt für die Bereitstellung von Eingabemitteln desweiteren die folgenden Schritte beinhaltet:
- Bereitstellen von Eingabemitteln (206), mittels derer besagter mindestens eine Benutzer die Lage jenes vom Benutzer steuerbaren Bildes in Bezug auf jede Achse vorgeben kann, und
- Bereitstellen von Eingabemitteln (206), mittels derer besagter mindestens eine Benutzer die Ausrichtung jenes vom Benutzer steuerbaren Bildes in Bezug auf jede Achse vorgeben kann.

7. Verfahren nach Anspruch 1, bei dem besagter Schritt des Erzeugens, Speicherns und Pflegens besagten konstruierten und vom Benutzer steuerbaren Bildes so abläuft, dass die Bewegungen von mindestens einer der vorher abgespeicherten idiosynkratischen Bewegungen und der vorprogrammierten Steuerbefehle abgeleitet werden.

8. Verfahren nach Anspruch 1, bei dem besagter Schritt des Erzeugens, Speicherns und Pflegens besagter konstruierter und vom Benutzer steuerbarer Bilder desweiteren Eingabemittel (206) umfasst, mit denen mindestens zwei vom Benutzer steuerbare Bilder miteinander zusammenwirken.

9. Verfahren nach Anspruch 1, bei dem besagter Schritt des Sendens von Ausgaben jenes vom Benutzer steuerbaren Bildes an besagtes Display die Verwendung mindestens eines der aufgezeichneten oder live aufgenommenen Videobilder umfasst.

10. Eine Vorrichtung, um zumindest einem Benutzer mindestens ein vom Benutzer steuerbares Bild zur Simulation von Körperbewegungen zur Verfügung zu stellen, die ein informationsverarbeitendes Gerät umfasst, das folgendes beinhaltet:
- Mittel zum Erzeugen, Speichern und Pflegen in einer Speichereinrichtung (210) eines informationsverarbeitenden Geräts (200) mindestens eines vom Benutzer steuerbaren Bildes, das auf Eingaben von besagtem mindestens einem Benutzer reagiert, so dass jene vom Benutzer steuerbaren Bilder so konstruiert sind, dass sie besagte simulierte Bewegungen ausführen, ohne dass besagter mindestens eine Benutzer die entsprechenden Körperbewegungen tatsächlich ausführt;
- Mittel zum Empfangen von Eingaben (206) von besagtem mindestens einem Benutzer, um das besagte, mindestens eine vom Benutzer steuerbare Bild zu steuern;
- Mittel zum Senden von Ausgaben von besagter Speichereinrichtung, so dass jene konstruierten und vom Benutzer steuerbaren Bilder besagte simulierte Bewegungen auf einem Display (204) ausführen, wobei die Vorrichtung **dadurch gekennzeichnet ist, dass**:
. es sich bei den Mitteln zur Aufbewahrung einer Aufzeichnung um eine vorher abgespeicherte Zusammenfassung von früheren Benutzer-Steuerbefehlen zusammen mit vorprogrammierten Steuerbefehlen handelt, um daraus Bildbewegungen zu konstruieren, wobei die aufbewahrte Aufzeichnung als vorhergehende aufbewahrte Aufzeichnung gespeichert wird, um sie durch nachfolgende Benutzer-Eingabebefehle verändern zu können; und dass
. das informationsverarbeitende Gerät die aufbewahrte Aufzeichnung gleichzeitig erweitert, indem die aufbewahrte Aufzeichnung durch eine neue Aufzeichnung ersetzt wird, die ihrerseits die aufbewahrte Aufzeichnung ist, in welche die nachfolgenden, von besagtem mindestens einem Benutzer eingegebenen Eingabesteuerbefehle integriert wurden, wodurch eine für den betreffenden Benutzer idiosynkratische aufbewahrte Aufzeichnung entsteht.

11. Vorrichtung nach Anspruch 10, die desweiteren Mittel beinh altet, mit denen besagter mindestens eine Benutzer sich die vom Benutzer steuerbaren Bildbewegungen aus besagten aufbewahrten Aufzeichnungen anzeigen lassen kann.

12. Vorrichtung nach Anspruch 10, die desweiteren Mittel beinh altet, mit denen Eingaben entgegengenommen werden können, um ausgewählte, charakteristische Parameter des besagten vom Benutzer steuerbaren Bildes bereitzustellen.

13. Vorrichtung nach Anspruch 10, die desweiteren Mittel beinh altet, mit denen Eingaben entgegengenommen werden können, um die angezeigte Bewegungsgeschwindigkeit des besagten vom Benutzer steuerbaren Bildes auszuwählen.

14. Vorrichtung nach Anspruch 10, bei der besagtes informationsverarbeitende Gerät (200) so angeordnet ist, dass die Bewegungen besagten vom Benutzer steuerbaren Bildes durch vorprogrammierte Bewegungsgrenzen eingeschränkt werden, so dass besagtes vom Benutzer steuerbare Bild die Bewegungen innerhalb jener vorprogrammierten Bewegungsgrenzen ausführt.

15. Vorrichtung nach Anspruch 10, bei der besagte Mittel für die Bereitstellung von Eingaben es desweiteren besagtem mindestens einem Benutzer ermöglichen, die Lage jenes vom Benutzer steuerbaren Bildes in Bezug auf jede Achse vorzugeben, und es besagtem mindestens einem Benutzer ermöglichen, die Ausrichtung jenes vom Benutzer steuerbaren Bildes in Bezug auf jede Achse vorzugeben.

16. Vorrichtung nach Anspruch 10, bei der besagtes informationsverarbeitende Gerät jenes vom Benutzer steuerbare Bild so konstruiert, dass die Bewegungen von mindestens einer der vorher abgespeicherten idiosynkratischen Bewegungen und der vorprogrammierten Steuerbefehle abgeleitet werden.

17. Vorrichtung nach Anspruch 10, bei der besagtes informationsverarbeitende Gerät zur Konstruktion jener vom Benutzer steuerbaren Bilder desweiteren Eingabemittel (206) umfasst, mit denen mindestens zwei vom Benutzer steuerbare Bilder miteinander zusammenwirken.

18. Vorrichtung nach Anspruch 10, bei der besagte Ausgabemittel zum Anzeigen jenes vom Benutzer steuerbaren Bildes die Verwendung mindestens eines der aufgezeichneten oder live aufgenommenen Videobilder umfassen.

## Revendications

1. Procédé consistant à munir au moins un utilisateur d'au moins une image pouvant être commandée par utilisateur pour simuler des mouvements physiques, le procédé comprenant les étapes consistant à :
produire, mémoriser et maintenir dans des moyens de mémoire (210) d'un appareil de système de traitement (200) au moins une image pouvant être commandée par utilisateur en réponse à des entrées provenant du au moins un utilisateur, l'image pouvant être commandée par utilisateur étant construite pour effectuer des mouvements qui simulent des mouvements physiques à la place du au moins un utilisateur effectuant des mouvements physiques réels correspondants ;
recevoir, au niveau de l'appareil de système de traitement, les entrées (206) provenant du au moins un utilisateur pour commander la au moins une image pouvant être commandée par utilisateur ;
envoyer des sorties provenant des moyens de mémoire, de sorte que les images pouvant être commandées par utilisateur construites effectuent les mouvements simulés sur des moyens d'affichage (204); le procédé étant **caractérisé en ce que** :
les entrées étant des commandes d'entrée ;
conserver un enregistrement conservé qui est une récapitulation pré mémorisée des dernières commandes de l'utilisateur associées à des commandes préprogrammées pour construire des mouvements d'image que l'enregistrement conservé retient comme un enregistrement conservé antécédent pour modification par des commandes d'entrée d'utilisateur ultérieures ; et
augmenter de manière synchrone l'enregistrement conservé en remplaçant l'enregistrement conservé par un nouvel enregistrement qui est l'enregistrement conservé qui a été intégré avec des commandes d'entrée ultérieures entrées par le au moins un utilisateur, en obtenant ainsi un enregistrement conservé qui est idiosyncratique de l'utilisateur.

2. Procédé selon la revendication 1, comprenant de plus une étape consistant à permettre au au moins un utilisateur de sélectionner pour revoir les mouvements d'image pouvant être commandée par l'utilisateur à partir des enregistrements conservés.

3. Procédé selon la revendication 1, comprenant de plus une étape consistant à recevoir une entrée pour fournir des paramètres caractéristiques sélectionnés de l'image pouvant être commandée par utilisateur.

4. Procédé selon la revendication 1, comprenant de plus une étape consistant à recevoir une entrée pour sélectionner la vitesse de mouvement affichée de l'image pouvant être commandée par utilisateur.

5. Procédé selon la revendication 1, dans lequel les mouvements de l'image pouvant être commandée par utilisateur sont limités par des limites de mouvement préprogrammées de sorte que l'image pouvant être commandée par utilisateur effectue les mouvements dans les bornes des limites de mouvement préprogrammées.

6. Procédé selon la revendication 1, dans lequel l'étape consistant à fournir des moyens d'entrée comprend de plus les étapes consistant à :
fournir des moyens d'entrée (206) pour permettre au au moins un utilisateur de spécifier la position de l'image pouvant être commandée par utilisateur par rapport à un axe quelconque ; et
fournir des moyens d'entrée (206) pour permettre au au moins un utilisateur de spécifier l'orientation de l'image pouvant être commandée par utilisateur par rapport à un axe quelconque.

7. Procédé selon la revendication 1, dans lequel ladite étape consistant à créer, mémoriser et conserver l'image pouvant être commandée par utilisateur construite de sorte que ses mouvements sont dérivés d'au moins un parmi des mouvements idiosyncratiques pré-mémorisés et des commandes préprogrammées.

8. Procédé selon la revendication 1, dans lequel l'étape consistant à créer, mémoriser et conserver les images pouvant être commandées par utilisateur construites comprend de plus des moyens d'entrée (206) par lesquels au moins deux images pouvant être commandées par utilisateur interagissent l'une avec l'autre.

9. Procédé selon la revendication 1, dans lequel l'étape consistant à envoyer des sorties de l'image pouvant être commandée par utilisateur aux moyens d'affichage comprend l'utilisation d'au moins une des images vidéo enregistrées et en direct.

10. Appareil pour munir au moins un utilisateur d'au moins une image pouvant être commandée par utilisateur pour simuler des mouvements physiques, comprenant un appareil de système de traitement comprenant :
des moyens agencés pour créer, mémoriser et conserver dans des moyens de mémoire (210) d'un appareil de système de traitement (200), au moins une image pouvant être commandée par utilisateur en réponse à des entrées provenant du au moins un utilisateur de sorte que les images pouvant être commandées par utilisateur sont construites pour effectuer des mouvements simulés au lieu du au moins un utilisateur effectuant des mouvements physiques réels correspondants ;
des moyens agencés pour recevoir des entrées (206) provenant du au moins un utilisateur pour commander au moins une image pouvant être commandée par utilisateur ;
des moyens agencés pour envoyer des sorties provenant des moyens de mémoire, de sorte que les images pouvant être commandées par utilisateur construites effectuent les mouvements simulés sur des moyens d'affichage (204), l'appareil étant **caractérisé par** :
des moyens agencés pour conserver un enregistrement conservé qui est une récapitulation pré-mémorisée des dernières commandes d'utilisateur associées à des commandes préprogrammées pour construire des mouvements d'image que l'enregistrement conservé retient comme enregistrement conservé antécédent pour modification par des commandes d'entrée utilisateur ultérieures ; et en ce que
l'appareil de système de traitement est agencé pour augmenter de manière synchrone l'enregistrement conservé en remplaçant l'enregistrement conservé par un nouvel enregistrement qui est l'enregistrement conservé qui a été intégré avec des commandes d'entrée ultérieures entrées par le au moins un utilisateur, en obtenant ainsi un enregistrement conservé qui est idiosyncratique de l'utilisateur.

11. Appareil selon la revendication 10, comprenant de plus des moyens agencés pour permettre au au moins un utilisateur de sélectionner pour revoir les mouvements d'image pouvant être commandée par utilisateur à partir des enregistrements conservés.

12. Appareil selon la revendication 10, comprenant de plus des moyens agencés pour recevoir une entrée pour fournir des paramètres caractéristiques sélectionnés de l'image pouvant être commandée par utilisateur.

13. Appareil selon la revendication 10, comprenant de plus des moyens agencés pour recevoir une entrée pour sélectionner la vitesse de mouvement affichée de l'image pouvant être commandée par utilisateur.

14. Appareil selon la revendication 10, dans lequel l'appareil de système de traitement (200) est agencé pour limiter les mouvements d'image pouvant être commandée par utilisateur par des limites de mouvement préprogrammées de sorte que l'image pouvant être commandée par utilisateur effectue les mouvements dans les bornes des limites de mouvement préprogrammées.

15. Appareil selon la revendication 10, dans lequel les moyens agencés pour fournir une entrée sont de plus agencés pour permettre au au moins un utilisateur de spécifier la position de l'image pouvant être commandée par utilisateur par rapport à un axe quelconque et permettre au au moins un utilisateur de spécifier l'orientation de l'image pouvant être commandée par utilisateur par rapport à un axe quelconque.

16. Appareil selon la revendication 10, dans lequel l'appareil de système de traitement est agencé pour construire l'image pouvant être commandée par utilisateur de sorte que les mouvements sont dérivés d'au moins un des mouvements idiosyncratiques pré-mémorisés et des commandes préprogrammées.

17. Appareil selon la revendication 10, dans lequel des moyens de l'appareil de système de traitement agencés pour construire les images pouvant être commandées par utilisateur comprennent de plus des moyens d'entrée (206) par lesquels au moins deux images pouvant être commandées par utilisateur interagissent l'une avec l'autre.

18. Appareil selon la revendication 10, dans lequel les moyens de sortie sont agencés pour afficher l'image pouvant être commandée par utilisateur comprennent l'utilisation d'au moins une des images vidéo enregistrées et en cours.
